# EUROPÄISCHE PATENTANMELDUNG

(11) **EP 0 914 851 A1**
(43) Veröffentlichungstag der Anmeldung: **12.05.1999**
(21) Anmeldenummer: 98120794.7
(22) Anmeldetag: 03.11.1998
(51) Int. Cl.: A63F 9/22

(54) **Geldbetätigtes Unterhaltungsgerät**

(30) Priorität: 08.11.1997 DE 19749491
(71) Anmelder: NSM AKTIENGESELLSCHAFT, 55411 Bingen (DE)
(72) Erfinder: Niederlein, Horst, 55411 Bingen (DE)
(74) Vertreter: Becker, Bernd, Dipl.-Ing.

(57) **Zusammenfassung**

Ein geldbetätigtes Unterhaltungsgerät umfaßt einen LCD-Projektor (2) zum Abspielen von auf einem Datenträger gespeicherten Audio- und Videosequenzen, insbesondere von Unterhaltungsspielen, von einem Wiedergabegerät (14), eine Bildwiedergabeeinrichtung (4,22) und eine Steuerkonsole (5). Um ein vielfältig anwendbares Unterhaltungsgerät (1) zu schaffen, ist die Steuerkonsole (5) als eigenständiges, vom LCD-Projektor (2) und der Bildwiedergabeeinrichtung (4,22) getrenntes Bedienpult (8) ausgebildet. In dieses sind ein Datenverarbeitungsgerät (12) mit einer Speichereinheit (13), das Wiedergabegerät (14) für den Datenträger, eine Bedieneinheit (8) und eine Geldverarbeitungseinrichtung (15) integriert. Als Datenträger werden vorzugsweise Digital-Video-Discs verwendet, auf denen Unterhaltungsspiele unterschiedlicher Art gespeichert sind.

## Beschreibung

Die Erfindung bezieht sich auf ein geldbetätigtes Unterhaltungsgerät, aufweisend einen LCD-Projektor zum Abspielen von auf einem Datenträger gespeicherten Audio-/Videosequenzen, insbesondere von Unterhaltungspielen, von einem Wiedergabegerät, eine Bildwiedergabeeinrichtung und eine Steuerkonsole.

Geldbetätigte Unterhaltungsgeräte mit einer Bildschirmröhre werden als Video-Spielgerät, insbesondere für Fahrsimulatoren oder als einen Gewinn in Aussicht stellende Geldspielgeräte verwendet. Derartige Unterhaltungsgeräte sind insofern nachteilig, als das Videospiel nicht gegen ein anderes nachträglich getauscht werden kann.

Darüber hinaus ist es bekannt, Audio- und/oder Videosequenzen von Videobändern, Compact Discs oder CD-ROM abzuspielen. Diese werden in ein hierfür geeignetes Wiedergabegerät, beispielsweise einen Videorecorder, eine CD-Player oder einen Computer, eingelegt und abgespielt, wobei die Audiosequenz über Lautsprecher und die Videosequenz über einen Bildschirm wieder gegeben wird.

Aus der DE 42 11 311 A1 ist ein geldbetätigtes Unterhaltungsgerät mit einer Bildschirmröhre in einem auf einem Unterschrank angeordneten Aufnahmegehäuse bekannt. Eine Bedienelemente tragende Konsole ist als eigenständiges Bedienpult ausgebildet, das gegenüber der Bildschirmröhre geringfügig abstandsverstellbar angeordnet ist. Herkömmliche Bildschirme haben relativ geringe Abmessungen, so daS das Bedienpult in der Regel immer in der Nähe des Bildschirms aufgestellt werden muß.

Des weiteren sind LCD-Projektoren bekannt, die sich durch eine besonders scharfe Bildwiedergabe mit hoher Bildqualität auszeichnen, da diese auf der Basis digitaler Datenumwandlung arbeiten. Dies wird durch 1 bis 1,5 Millionen Bildpunkte bei hoher Bildrandausleuchtung erreicht. Ein weiterer Vorteil dieser Geräte besteht darin, daS diese immer noch eine brillante Bildqualität auf beispielsweise einer Bildleinwand garantieren, wenn diese mehrere Meter vom Projektor entfernt aufgestellt ist.

Es ist Aufgabe der Erfindung, ein geldbetätigtes Unterhaltungsgerät der eingangs genannten Art zu schaffen, welches durch Kombination mehrerer Einrichtungen ein neues Unterhaltungssystem zur Verfügung stellt, das vielseitig einsetzbar und verwendbar ist.

Erfindungsgemäß wird die Aufgabe dadurch gelöst, daß die Steuerkonsole als eigenständige, vom LCD-Projektor und der Bildwiedergabeeinrichtung getrenntes Bedienpult ausgebildet ist, in welches ein Datenverarbeitungsgerät mit einer Speichereinheit, das Wiedergabegerät für den Datenträger, eine Bedieneinheit und eine Geldverarbeitungseinrichtung integriert sind. Hierbei sind bevorzugt der LCD-Projektor und die Bildwiedergabeeinrichtung beabstandet zu einander und beabstandet zur Steuerkonsole in einem Raum angeordnet. Die Verwendung eines LCD-Projektors ermöglicht eine Bildwiedergabeeinrichtung besonders großer Abmessungen, so daß gerade in großen Räumen das auf der Bildwiedergabeeinrichtung ablaufende Unterhaltungsspiel aus größerer Entfernung auch von mehreren Personen verfolgt werden kann. Dies gestattet auch eine weit von der Bildwiedergabeeinrichtung entfernte Aufstellung der Steuerkonsole. Von der Steuerkonsole kann durch Geldeingabe in die Geldverarbeitungseinrichtung das Unterhaltungsspiel gestartet und über die Bedieneinheit gesteuert werden. Auch ein Wechseln des Datenträgers kann durch die Bedieneinheit vorgesehen werden.

Zweckmäßigerweise wird der LCD-Projektor in der oberen Ecke eines Raumes oder an einer Raumdecke befestigt, um einerseits den Zugriff durch unbefugte Personen zu verhindern und andererseits ein ungestörtes Abstrahlen der Videosequenz auf die Bildwiedergabeeinrichtung zu ermöglichen.

Um eine individuelle Anpassung des geldbetätigten Unterhaltungsgerätes an unterschiedliche Räumlichkeiten zu ermöglichen, sind die Bildwiedergabeeinrichtung und/oder die Steuerkonsole ortsbeweglich ausgebildet.

Alternativ wird die Aufgabe auch dadurch gelöst, daß der LCD-Projektor und die Bildwiedergabeeinrichtung zusammen mit einem Datenverarbeitungsgerät mit einer Speichereinheit und dem Wiedergabegerät für den Datenträger in einem gemeinsamen Gehäuse untergebracht sind, wobei die Steuerkonsole als eigenständiges, von dem Gehäuse getrenntes Bedienpult ausgebildet ist, welches eine Bedieneinheit und eine Geldverarbeitungseinrichtung umfaßt. Hierbei sind die für die Ausstrahlung der Audio-/Videosequenzen notwendigen Geräte in einem gemeinsamen Gehäuse untergebracht, wobei die Größe des Gehäuses von der Größe der darin integrierten Bildwiedergabeeinrichtung abhängig ist. Wiederum in Abhängigkeit von der Größe der Bildwiedergabeeinrichtung kann die Steuerkonsole in unterschiedlicher Entfernung vom Gehäuse aufgestellt werden. Bevorzugt ist hierbei das Gehäuse als Standgerät ausgebildet. Dadurch kann dieses leicht von einem Raum oder einem Ort in einen anderen Raum oder Ort transportiert und aufgestellt werden. Das Gehäuse schützt darüber hinaus vor Zugriffen unberechtigter Personen.

Um die im Gehäuse angeordneten Geräte, wie LCD-Projektor, Datenverarbeitungsgerät und Wiedergabegerät, bedienen zu können, ist die Steuerkonsole mit dem Gehäuse vorzugsweise durch Datenübertragungsleitungen gekoppelt.

Gemäß einer bevorzugten Ausbildung dieser alternativen Ausführung der Erfindung sind die aus dem LCD-Projektor ausgestrahlten Audio-/Videosequenzen über eine Spiegelanordnung auf die Wiedergabeeinrichtung projizierbar. Dabei sind selbstverständlich unterschiedliche Spiegelsysteme anwendbar, wobei es darauf ankommt, das Spiegelsystem in Abhängigkeit von der Größe der Bildwiedergabeeinrichtung auszugestalten.

Zur Vergrößerung des Einsatzzweckes und in Anpassung an die räumlichen Gegebenheiten kann weiterhin die Steuerkonsole zum Gehäuse abstandsverstellbar angeordnet werden.

Die Aufgabe wird auch durch ein Unterhaltungsgerät gelöst, beim dem der LCD-Projektor und die Bildwiedergabeeinrichtung in einem gemeinsamen Gehäuse untergebracht sind, wobei die Steuerkonsole als eigenständiges, von dem Gehäuse getrenntes Bedienpult ausgebildet ist, welches ein Datenverarbeitungsgerät mit einer Speichereinheit, ein Wiedergabegerät für den Datenträger, eine Bedieneinheit und eine Geldverarbeitungseinrichtung umfaßt. Dadurch, daß nur der von der Steuerkonsole gesteuerte LCD-Projektor im vom Bedienpult entfernten Gehäuse untergebracht ist, können LCD-Projektoren beliebig unterschiedlicher Bauart im Gehäuse installiert werden, welche die durch sie reflektierten Videosequenzen auf die Bildwiedergabeeinrichtung projizieren.

Die vorgenannten alternativen Unterhaltungsgeräte weisen gemeinsame Merkmale auf. Zweckmäßig und notwendig ist der LCD-Projektor mit dem Datenverarbeitungsgerät und/oder dem Wiedergabegerät sowie der Steuerkonsole vorzugsweise über Datenübertragungsleitungen gekoppelt. Die Steuerkonsole steuert sonach das Datenverarbeitungsgerät bzw. das Wiedergabegerät, welches den Datenträger enthält. Die auf dem Datenträger enthaltenen Audio-/Videosequenzen werden vom Datenverarbeitungsgerät bzw. dem Wiedergabegerät auf den LCD-Projektor übertragen und von diesem auf die Bildwiedergabeeinrichtung übertragen. Die Bildwiedergabeeinrichtung kann als Bildleinwand definierter Größe ausgebildet sein.

Vorzugsweise ist das Datenverarbeitungsgerät ein Personalcomputer, der für den vorliegenden Anwendungszweck am besten geeignet ist, insbesondere auch deshalb, weil derartige Personalcomputer immer mit einer Daten speichernden Festplatte ausgerüstet und vielseitig einsetzbar sind.

In einer weiterbildenden Maßnahme ist der LCD-Projektor an eine Schnittstelle des Datenverarbeitungsgerätes, vorzugsweise eines Personalcomputers, anschließbar, so daS der LCD-Projektor von diesem aus gesteuert werden kann.

Als die Audio-/Videosequenzen speichernder Datenträger kommen insbesondere Digital-Video-Discs, Videobänder, Festspeicher eines Personalcomputers oder CD-ROMs in Betracht. Diese zeichnen sich durch hohe Speicherkapazitäten aus und können somit große und speicherintensive Audio- und/oder Video-Sequenzen aufnehmen. Darüber hinaus können diese selbstverständlich auch spielbedingte bzw. spielabweichende Audio-/Videosequenzen speichern, die durch die Bedienungseinrichtung vom Bediener beeinflußt werden können.

Zweckmäßigerweise ist die Bedieneinheit der Steuerkonsole mit mindestens einem Steuerorgan versehen. Es können auch mehrere Steuerorgane vorgesehen werden, wenn mehrere Personen das geldbetätigte Unterhaltungsgerät benutzen dürfen. Als Steuerorgan eignet sich besonders ein Joystick, eine Tastatur und/oder eine Maus. Die Auswahl des geeigneten Steuerorgans ist abhängig vom ausgewählten Unterhaltungsspiel.

Des weiteren ist bevorzugt das geldbetätigte Unterhaltungsgerät mit einem Lautsprechersystem ausgerüstet, um auch die Audio-Sequenzen wiedergeben zu können und das Unterhaltungsspiel interessanter zu machen.

Die in der Steuerkonsole vorgesehene Geldverarbeitungseinrichtung umfaßt zumindest eine Geldeingabe, einen Geldprüfer, einen Geldsammelbehälter und eine Geldausgabe. Durch Geldeingabe, etwa durch Münzen, Geldscheine, Token oder Kreditkarte, wird ein Unterhaltungsspiel ausgelöst und nach Ablauf einer bestimmten Zeit oder Eintritt eines bestimmten Ergebnisses bzw. Ereignisses beendet. Um den Zugriff auf die Geldverarbeitungseinrichtung durch unbefugte Personen zu verhindern, ist der die Geldverarbeitungseinrichtung umfassende Bereich der Steuerkonsole als Tresor ausgebildet. Dadurch wird sichergestellt, daS nur hierzu berechtigte Personen, wie Kassierpersonal, Zugriff auf die Geldverarbeitungseinrichtung haben.

Das erfindungsgemäße Unterhaltungsgerät kann sehr variabel eingesetzt werden. Durch einen Austausch des Datenträgers oder eine rechner- bzw. tastengesteuerte Auswahl unterschiedlicher Datenträger können sowohl verschiedenartige Videospiele als auch verschiedenartige, einen Gewinn in Aussicht stellende Spiele durch Simulation eines beliebigen Geldspielgerätes durchgeführt werden. Diese Unterhaltungsspiele können sich durch ihre große Variabilität über einen längeren Zeitraum erstrecken. Daher ist vorzugsweise in die Steuerkonsole ein Sitz für den Bediener integriert.

An Ausführungsbeispielen wird der der Erfindung zugrunde liegende Gedanken unter Bezugnahme auf die Zeichnungen näher erläutert. Diese zeigen in:
- Fig. 1: ein erfindungsgemäßes geldbetätigtes Unterhaltungsgerät nach einer ersten Ausführungsform,
- Fig. 2: ein erfindungsgemäßes geldbetätigtes Unterhaltungsgerät nach einer zweiten Ausführungsform,
- Fig. 3: ein erfindungsgemäßes geldbetätigtes Unterhaltungsgerät nach einer modifizierten Ausführungsform nach Fig. 2,
- Fig. 4: eine Perspektivansicht einer abgewandelten Ausführungsform eines Unterhaltungsgerätes nach Fig. 2 und
- Fig. 5: eine Seitenansicht des Unterhaltungsgerätes nach Fig. 4.

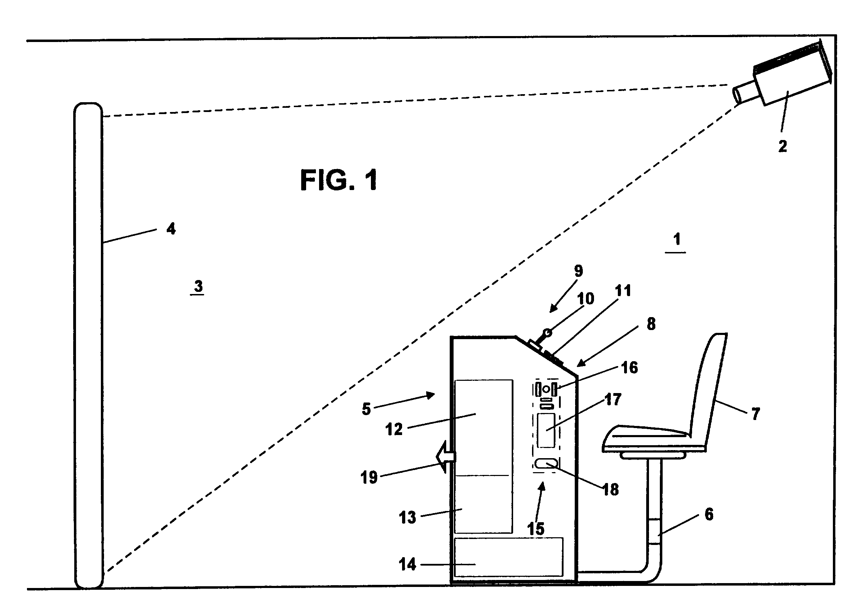

Ein münzbetätigtes Unterhaltungsgerät 1 nach Fig. 1 weist einen LCD-Projektor 2 auf. Dieser ist im oberen Eckbereich eines Raumes 3 angebracht. Beabstandet zum LCD-Projektor 2 ist eine als Bildleinwand 4 ausgebildete Bildwiedergabeeinrichtung großer Abmessung im Raum 3 aufgestellt. Die strichlierten Linien vom LCD-Projektor 2 zur Bildleinwand 4 verdeutlichen den Abstrahlbereich der vom LCD-Projektor 2 auf die Bildleinwand projizierten Bilder.

Im Raum befindet sich weiterhin eine Steuerkonsole 5, über die durch ein abgewinkeltes teleskopartiges Stuhlbein 6 ein Sitz 7 für einen Bediener des Unterhaltungsgerätes 1 integriert ist. Das Stuhlbein 6 ist über nicht dargestellte, im Boden des Raumes 3 oder in der Steuerkonsole 5 verankerte Führungselemente längsverstellbar ausgebildet. Durch die teleskopartige Ausbildung des Stuhlbeins 6 ist der Sitz 7 auch höhenverstellbar.

Die Steuerkonsole 5 weist ein Bedienpult 8 auf, an dem verschiedene Steuerorgane 9 angeordnet sind. Als Steuerorgane 9 sind ein Joystick 10 und eine Tastatur 11 auf dem Bedienpult 9 angeordnet. Im Inneren der Steuerkonsole 5 befindet sich ein Datenverarbeitungsgerät 12, vorzugsweise ein Personalcomputer, mit einer Speichereinheit 13 hoher Speicherkapazität, insbesondere einem Festspeicher bzw. einer Festplatte. Unterhalb des Datenverarbeitungsgerätes 12 ist weiterhin ein Wiedergabegerät 14 vorgesehen, welches zur Wiedergabe von auf Digital-Video-Discs gespeicherten Audio-/Videosequenzen geeignet ist.

Des weiteren ist in die Steuerkonsole 5 eine Geldverarbeitungseinrichtung 15 integriert, die als Tresor ausgebildet ist. Diese sicherheitstechnisch abgeschlossene Geldverarbeitungseinrichtung 15 umfaßt eine Geldeingabe 16, einen Geldprüfer 17 mit einem Geldsammelbehälter und eine Geldausgabe 18. Die Geldeingabe 16 besteht weiterhin aus einem Münzeinwurfschlitz, einem Tokeneinwurfschlitz, einer Rückgabetaste, einem Gelscheineingabeschlitz und einem Kreditkarteneinschubschlitz.

Durch Einwurf beispielsweise einer Münze in die Geldeingabe 16 und deren Akzeptanz durch den Geldprüfer 17 wird das Datenverarbeitungsgerät 12 aktiviert. Dieses steuert sowohl das Wiedergabegerät 14 als auch den LCD-Projektor 2. Dadurch werden die auf der Digital-Video-Disc im Wiedergabegerät 14 gespeicherten Audio-/Videosequenzen abgespielt und deren Signale und Informationen auf den LCD-Projektor 2 übertragen. Dieser projiziert dann die Bilder auf die Bildleinwand 4. Der Bediener kann über die Steuerorgane 9, beispielsweise das Joystick 10 oder die Tastatur 11, Einfluß auf das auf der Digital-Video-Disc gespeicherte Unterhaltungsspiel nehmen. Die Digital-Video-Discs können jederzeit von berechtigten Personen im Wiedergabegerät 14 ausgetauscht werden, um andere Unterhaltungsspiele zur Verfügung zu stellen.

Des weiteren ist am Datenverarbeitungsgerät 12 eine Schnittstelle 19 vorgesehen, die mit einem offenen oder geschlossenen Datenübertragungsnetz, beispielsweise dem Internet, verbunden ist. Dadurch können interaktive Unterhaltungsspiele von mehreren Personen gleichzeitig durchgeführt werden, die gegebenenfalls gleichzeitig Einfluß auf das auf der Bildleinwand 4 wiedergegebene Spielgeschehen haben.

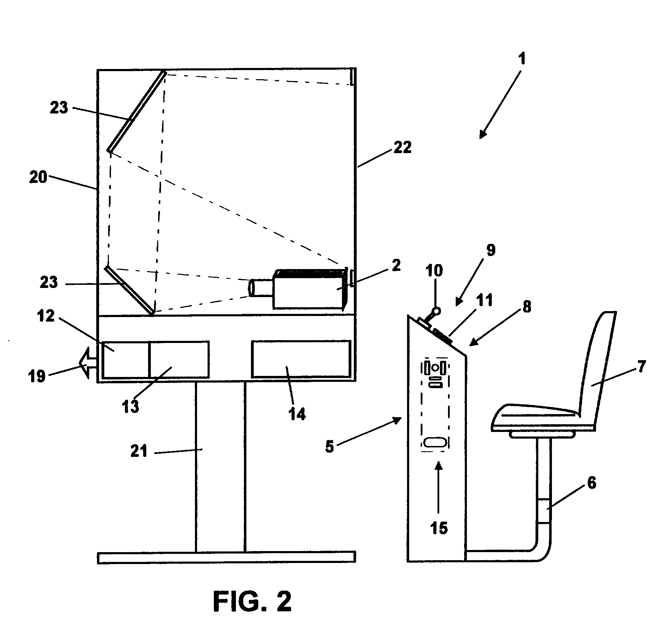

Das Unterhaltungsgerät nach Fig. 2 unterscheidet sich von dem nach Fig. 1 dadurch, daß alle zur Erzeugung der Audio-/Videosequenzen erforderlichen Geräte in einem gemeinsamen Gehäuse 20 untergebracht sind. Dazu gehören insbesondere der LCD-Projektor 2, das Datenverarbeitungsgerät 12 mit der Speichereinheit 13 und das Wiedergabegerät 14 für Unterhaltungsspiele und/oder Audio-/Videosequenzen speichernde Datenträger. Das Gehäuse 20 ruht auf einem Standfuß 21 und ist ortsbeweglich ausgebildet. An der Vorderseite des Gehäuses 20 ist eine großflächige Bildwiedergabeeinrichtung 22 angeordnet, auf welche die vom Wiedergabegerät 14 ausgegebenen Bildsequenzen vom LCD-Projektor 2 über ein aus mehreren Spiegeln 23 bestehendes Spiegelsystem projiziert werden.

Beabstandet zum Gehäuse 20 ist die in Fig. 1 beschriebene Steuerkonsole 5 angeordnet, die das Bedienpult 8 und die Geldverarbeitungseinrichtung 15 umfaßt.

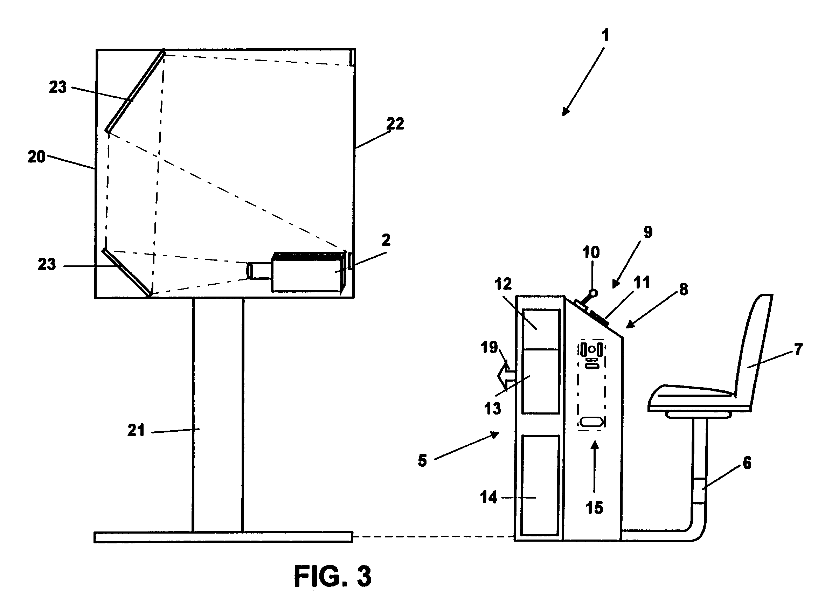

Bei der nach Fig. 2 abgewandelten Ausführungsform des Unterhaltungsgeräte nach Fig. 3 sind der LCD-Projektor 2 und die Bildwiedergabeeinrichtung 22 in einem gemeinsamen Gehäuse 20 untergebracht. Die Steuerkonsole 5 als auch wie bei der Ausführungsform nach Fig. 2 als eigenständiges, von dem Gehäuse 20 getrenntes Bedienpult 8 ausgebildet. Dieses weist jedoch neben der Bedieneinheit und der Geldverarbeitungseinrichtung zusätzlich noch das Datenverarbeitungsgerät 12 mit Speichereinheit 13 und das Wiedergabegerät 14 für den Datenträger auf. Die Steuerkonsole 5 ist über eine strichliert dargestellte Steuerleitung mit dem im entfernten Gehäuse 20 aufgenommenen LCD-Projektor verbunden, der seine Steuersignale von dem als Personalcomputer ausgebildeten Datenverarbeitungsgerät 12 erhält.

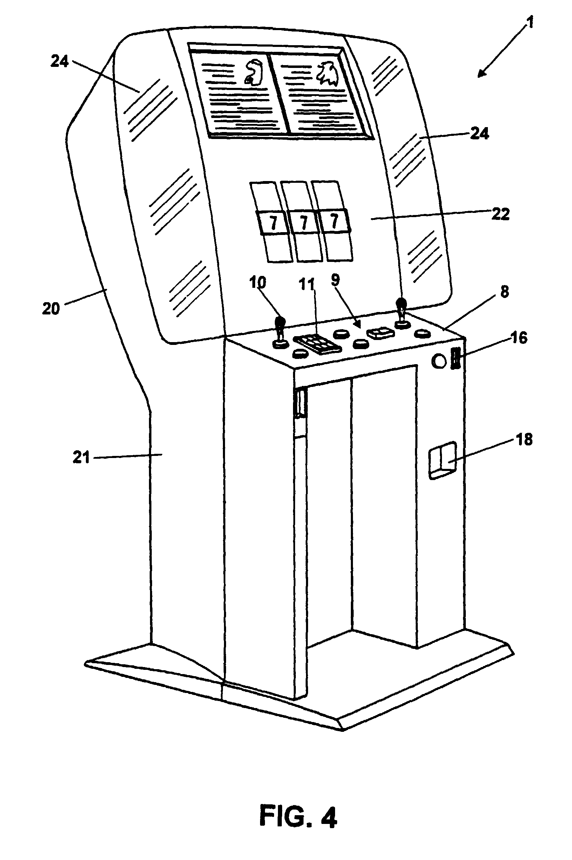

Fig. 4 zeigt eine Perspektivansicht eines Unterhaltungsgerätes 1, das als Standgerät ausgebildet ist und bei dem die Steuerkonsole 5 unmittelbar am Gehäuse 20 unter Weglassung des Sitzes 7 angeordnet ist. Auf der Bildwiedergabeeinrichtung 22 wird ein Unterhaltungsspiel in Form von Videosequenzen wiedergegeben. Seitlich der Bildwiedergabeeinrichtung 22 sind Lautsprecher 24 angebracht, auf denen die Audio-Sequenzen wieder gegeben werden. Im Inneren des Gehäuses 20 sind die für die Übertragung der Audio- und Videosequenzen erforderlichen Geräte untergebracht, wie dies in Bezug auf Fig. 2 beschrieben wurde.

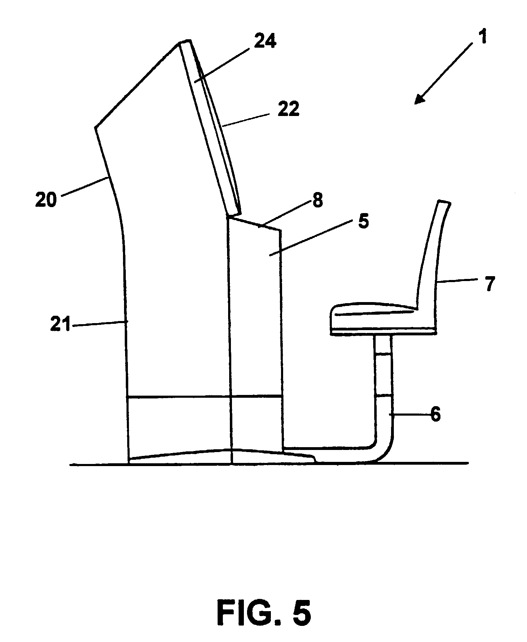

In Fig. 5 ist das gleiche Gerät gemäß Fig. 4 in einer Seitenansicht dargestellt, wobei der Sitz 7 in die Steuerkonsole 15 des Unterhaltungsgerätes 1, gegebenenfalls abstandsverstellbar, integriert ist.

## Patentansprüche

**1.** Geldbetätigtes Unterhaltungsgerät, aufweisend einen LCD-Projektor zum Abspielen von auf einem Datenträger gespeicherten Audio-/Videosequenzen, insbesondere von Unterhaltungsspielen, von einem Wiedergabegerät, eine Bildwiedergabeeinrichtung und eine Steuerkonsole, dadurch gekennzeichnet, daß die Steuerkonsole (5) als eigenständiges, vom LCD-Projektor (2) und der Bildwiedergabeeinrichtung (4,22) getrenntes Bedienpult ausgebildet ist, in welches ein Datenverarbeitungsgerät (12) mit einer Speichereinheit (13), das Wiedergabegerät (14) für den Datenträger, eine Bedieneinheit (8) und eine Geldverarbeitungseinrichtung (15) integriert sind.

**2.** Unterhaltungsgerät nach Anspruch 1, dadurch gekennzeichnet, daß der LCD-Projektor (2) und die Bildwiedergabeeinrichtung (4,22) beabstandet zueinander und beabstandet zur Steuerkonsole (5) in einem Raum (3) angeordnet sind.

**3.** Unterhaltungsgerät nach Anspruch 1 oder 2, dadurch gekennzeichnet, daß die Bildwiedergabeeinrichtung (4, 22) und/oder die Steuerkonsole (5) ortsbeweglich ausgebildet sind.

**4.** Geldbetätigtes Unterhaltungsgerät, aufweisend einen LCD-Projektor zum Abspielen von auf einem Datenträger gespeicherten Audio-/Videosequenzen, insbesondere von Unterhaltungsspielen, von einem Wiedergabegerät, eine Bildwiedergabeeinrichtung und eine Steuerkonsole, dadurch gekennzeichnet, daß der LCD-Projektor (2) und die Bildwiedergabeeinrichtung (22) zusammen mit einem Datenverarbeitungsgerät (12) mit einer Speichereinheit (13) und dem Wiedergabegerät (14) für den Datenträger in einem gemeinsamen Gehäuse (20) untergebracht sind, wobei die Steuerkonsole (5) als eigenständiges, von dem Gehäuse (20) getrenntes Bedienpult (8) ausgebildet ist, welches eine Bedieneinheit (8) und eine Geldverarbeitungseinrichtung (15) umfaßt.

**5.** Unterhaltungsgerät nach Anspruch 4, dadurch gekennzeichnet, daß die aus dem LCD-Projektor (2) ausgestrahlten Audio-/Videosequenzen über eine Spiegelanordnung (23) auf die Bildwiedergabeeinrichtung (4,22) projizierbar sind.

**6.** Unterhaltungsgerät nach Anspruch 4 oder 5, dadurch gekennzeichnet, daS das Gehäuse (20) als Standgerät (21) ausgebildet ist.

**7.** Unterhaltungsgerät nach einem der Ansprüche 5 bis 6, dadurch gekennzeichnet, daS die Steuerkonsole (5) mit dem Gehäuse (20) gekoppelt ist.

**8.** Unterhaltungsgerät nach einem der Ansprüche 4 bis 7, dadurch gekennzeichnet, daS die Steuerkonsole (5) zum Gehäuse (20) abstandsverstellbar angeordnet ist.

**9.** Geldbetätigtes Unterhaltungsgerät, aufweisend einen LCD-Projektor zum Abspielen von auf einem Datenträger gespeicherten Audio-/Videosequenzen, insbesondere von Unterhaltungsspielen, von einem Wiedergabegerät, eine Bildwiedergabeeinrichtung und eine Steuerkonsole, dadurch gekennzeichnet, daß der LCD-Projektor (2) und die Bildwiedergabeeinrichtung (22) in einem gemeinsamen Gehäuse (20) untergebracht sind, wobei die Steuerkonsole (5) als eigenständiges, von dem Gehäuse (20) getrenntes Bedienpult (8) ausgebildet ist, welches ein Datenverarbeitungsgerät (12) mit einer Speichereinheit (13), ein Wiedergabegerät (14) für den Datenträger, eine Bedieneinheit (8) und eine Geldverarbeitungseinrichtung (15) umfaßt.

**10.** Unterhaltungsgerät nach einem der Ansprüche 1 bis 9, dadurch gekennzeichnet, daß der LCD-Projektor (2) mit dem Datenverarbeitungsgerät (12) und/oder dem Wiedergabegerät (14) sowie der Steuerkonsole (5) gekoppelt ist.

**11.** Unterhaltungsgerät nach einem der Ansprüche 1 bis 10, dadurch gekennzeichnet, daß die Bildwiedergabeeinrichtung als Bildleinwand (4) ausgebildet ist.

**12.** Unterhaltungsgerät nach einem der Ansprüche 1 bis 11, dadurch gekennzeichnet, daß das Datenverarbeitungsgerät (12) ein Personalcomputer ist.

**13.** Unterhaltungsgerät nach einem der Ansprüche 1 bis 12, dadurch gekennzeichnet, daß der LCD-Projektor (2) an eine Schnittstelle des Datenverarbeitungsgerätes (12) anschließbar ist.

**14.** Unterhaltungsgerät nach einem der Ansprüche 1 bis 13, dadurch gekennzeichnet, daß der Datenträger eine Digital-Video-Disc, ein Videoband, ein Festspeicher eines Personalcomputers oder eine CD-ROM ist.

**14.** Unterhaltungsgerät nach einem der Ansprüche 1 bis 13, dadurch gekennzeichnet, daß die Bedieneinheit (8) der Steuerkonsole (5) mit mindestens einem Steuerorgan (9) versehen ist.

**15.** Unterhaltungsgerät nach Anspruch 14, dadurch gekennzeichnet, daß das Steuerorgang (9) ein Joystick (10), eine Tastatur (11) und/oder eine Maus ist.

**16.** Unterhaltungsgerät nach einem der Ansprüche 1 bis 15, dadurch gekennzeichnet, daß dieses mit einem Lautsprechersystem (24) versehen ist.

**17.** Unterhaltungsgerät nach einem der Ansprüche 1 bis 16, dadurch gekennzeichnet, daß das Datenverarbeitungsgerät (12) mit einer Schnittstelle (19) zum Anschluß an ein Datenübertragungsnetz versehen ist.

**18.** Unterhaltungsgerät nach einem der Ansprüche 1 bis 17, dadurch gekennzeichnet, daß die Geldverarbeitungseinrichtung (15) eine Geldeingabe (16), einen Geldprüfer (17) mit einem Geldsammelbehälter und eine Geldausgabe (18) aufweist.

**19.** Unterhaltungsgerät nach einem der Ansprüche 1 bis 18, dadurch gekennzeichnet, daß zumindest der die Geldverarbeitungseinrichtung (15) umfassende Bereich der Steuerkonsole (5) als Tresor ausgebildet ist.

**20.** Unterhaltungsgerät nach einem der Ansprüche 1 bis 19, dadurch gekennzeichnet, daß durch einen Austausch des Datenträgers oder einer rechner- bzw. tastengesteuerte Auswahl unterschiedlicher Datenträger sowohl verschiedenartige Videospiele als auch verschiedenartige, einen Gewinn in Aussicht stellende Spiele durch Simulation eines Geldspielgerätes durchführbar sind.

**21.** Unterhaltungsgerät nach einem der Ansprüche 1 bis 20, dadurch gekennzeichnet, daß in die Steuerkonsole (5) ein Sitz (7) für den Bediener integriert ist.
